# EUROPEAN PATENT APPLICATION

(11) **EP 0 779 323 A2**
(43) Date of publication of application: **18.06.1997**
(21) Application number: 96830587.0
(22) Date of filing: 18.11.1996
(51) Int. Cl.: C08J 3/24

(54) **Method for quickly shaking out plastics molded articles of manufacture**

(30) Priority: 14.12.1995 IT MI952630
(71) Applicant: ROOFING ITALIANA S.r.l., 20134 Milano (IT)
(72) Inventor: Marinelli, Giuseppe, 20134 Milano (IT)
(74) Representative: Cicogna, Franco

(57) **Abstract**

The present invention relates to a method for quickly shaking out plastics molded articles of manufacture, which comprises the steps of mixing addition curing plastic materials with radically radiating curing plastics materials, pouring the obtained mixture into a mold, radiating by a light radiation compatible to the radically curing plastics materials, in order to provide a self-supporting molded or cast article of manufacture, and withdrawing this article of manufacture from the mold thereby allowing the addition curing plastics materials to fully cure or polymerize.

## Description

### BACKGROUND OF THE INVENTION

The present invention relates to a method for quickly shaking out plastics molded articles of manufacture.

As is known, plastics material article of manufactures are conventionally made by filling molds by suitable plastic material compositions and, as the article must be constituted by a composite material, by impregnating fabrics by resins, laying the resin impregnated fabrics on a mold and pressing the article being made by a vacuum-bag type of technique.

Depending on the used plastics material type, the curing or polymerizing can be carried out by a radical curing method or an addition curing method, at environment or room temperature or with a heating processing.

With respect to the addition curing plastics materials, in particular epoxy resins or polyurethane resins, it is possible to make article of manufacture having very good mechanical, electrical and chemical resistance characteristics.

This type of plastics materials has moreover the advantage of providing a very good size stability, a low contraction during the curing or polymerization process, as well as very good adhesive properties with respect to possible materials introduced into the mold together with the plastics material.

These plastics materials, however, require a comparatively long curing time in order to allow the made article of manufacture to be easily removed from the mold, with a consequent low yield.

The radically cured plastics materials, on the other hand, which are polymerized under a suitable curing radiation, such as photopolymers or other resins which are suitably associated with a specifically designed photostarting agent, have the great advantage of polymerizing in a very short time, as they are processed under a suitable radiation, such as a visible light radiation or a U.V. radiation.

However, such a processing causes the article being made to greatly contract or shrink, thereby great stresses are generated inside the article and the size of the latter being unstable.

### SUMMARY OF THE INVENTION

Accordingly, the aim of the present invention is to solve the above mentioned problems, by providing a method for quickly shaking out plastics molded articles of manufacture, which allows to greatly reduce the in-mold time, while being free of the negative effects which are conventionally encountered in an article of manufacture being made by a photocuring method.

Within the scope of the above mentioned aim, a main object of the present invention is to provide such a method which allows to withdraw from the mold an article of manufacture before a full curing thereof, without damaging the made article.

Another object of the present invention is to provide such a method for quickly shaking out plastics molded articles of manufacture which, owing to its specific features is very reliable and safe in operation.

Yet another object of the present invention is to provide such a method which can be easily carried out by using easily commercially available elements and materials and which, moreover, is very advantageous, from a mere economic standpoint.

According to one aspect of the present invention, the above mentioned aim and objects, as well yet other objects, which will become more apparent hereinafter, are achieved by a method for quickly shaking out plastics molded articles of manufacture, characterized in that said method comprises the steps of mixing addition curing plastics materials with radically radiation curing plastics materials, pouring the obtained mixture into a mold, radiating by a light radiation compatible with said radically curing plastics materials in order to provide a self-supporting article, and shaking out from the mold said article to allow the addition curing plastics materials to fully cure.

Further characteristics and advantages of the present invention will become more apparent from the following detailed disclosure of a preferred, though not exclusive, embodiment of the subject method for quickly shaking out plastics molded articles of manufacture, which will be disclosed with reference to several exemplary embodiments.

### DESCRIPTION OF THE PREFERRED EMBODIMENTS

The present invention, in particular, has been specifically designed to provide a method for quickly shaking out articles of manufacture, which are made starting from a combination of plastics materials or resins and, more specifically, in which are mixed addition curing plastics materials and radically radiation curing plastics materials.

More specifically, the mixture comprises epoxy resins, polyurethane resins or the like, adapted to cure or polymerize with a suitable reaction starting agent, and resins comprising photopolymers and/or acrylic monomers, methacrylic monomers or styrene, as suitable photo-started, so that the combined mixture, as impinged upon by a suitable U.V. radiation, i.e. a radiation compatible to the type of the resin being used, is transformed from a liquid status to a solid status, having sufficient mechanical characteristics to provide a self-supporting article.

This quick partial curing of the resins provides the possibility of quickly disengaging the article being made from the mold, while allowing that portion of the addition curing resin or plastics material, which is generally constituted by an epoxy resin, and which is not already fully cured, to compensate the shrinking, and reduce to a minimum the stresses in the article of manufacture, thereby providing good effects on the mechanical properties of said article.

Moreover, as inserts or combined materials are used, in particular metal materials, the very good properties of the epoxy resins will provide very good results.

The full curing of that portion of the resin which cures by addition occurs slowly in the time at room temperature or during a suitable hot ageing, according to a typical method for curing the epoxy resins.

The selection of the components of the combination must be performed in a skill and accurate manner, since it is necessary to monitor a perfect compatibility between the several components and the latter must be so selected to provide the desired reactivity and end performance characteristics.

From experimental tests, it has been found that very good end properties are obtained by using material combinations including an amount of photocuring plastics materials or resins from 25% to 85% and, accordingly, an amount of addition curing plastics materials from 75% to 15%.

Thereinbelow will follow several examples for better illustrating a practical manner for carrying out the subject method.

### Example 1

A material combination constituted by:

| | |
|---|---|
| A reaction product of a liquid bisphenol epoxy resin (DGEBA) and acryl acid, diluted by 25% of diacrylate tripropylenglycole | 70 parts by weight |
| Trimethylolpropanotrimethacrylate | 30 parts by weight |
| 2,2-dimetoxy-1,2-diphenylethan-1-one + bisacylphosphineoxyde 75/25 | 1 part by weight |
| Bisphenol epoxy resin (DGEBA) with an epoxy equivalent of about 190 | 30 parts by weight |
| Polyaminoamide curing agent with an amine index of about 300 | 20 parts by weight |

can be processed after an exposition for 5 minutes to a radiation of a UVA lamp of the "EVERSUN" type of the company OSRAM, emitting a light radiation in the range of 320-420 nm. It fully cures after about 7 days at°20 C, 1 day at 50°C or 3 hours at 80°C, and exhibits a very good adhesion properties for metal materials, in particular steel and aluminium.

### Example 2

A material combination constituted by:

| | |
|---|---|
| A reaction product of a liquid bisphenol epoxy resin and acryl acid diluted with 25% tripropylenglycol diacrylate | 70 parts by weight |
| Trimethylolpropantrimethacrylate | 30 parts by weight |
| 2,2-dimetoxy-1,2-diphenylethan-1-one + bisacylphenoxyde 75/25 | 1 part by weight |
| Bisphenol epoxy resin (DGEBA) with an epoxy equivalent of about 190 | 50 parts by weight |

Polyoxypropilenamine curing agent
with an amine equivalent of about 60 16 parts by weight
can be processed, after an exposition for 5 minutes to the radiation of a UVA lamp of the "EVERSUN" type of the company OSRAM, emitting a light radiation in the range of 320-420 nm. It fully cures after about 7 days at 25°C, 1 day at 50°C or 2 hours at 80°C, and exhibits a good adhesion for metal materials and very good mechanical characteristics, in particular a very good resistance to impacts or resilience.

### Example 3

A material combination constituted by:

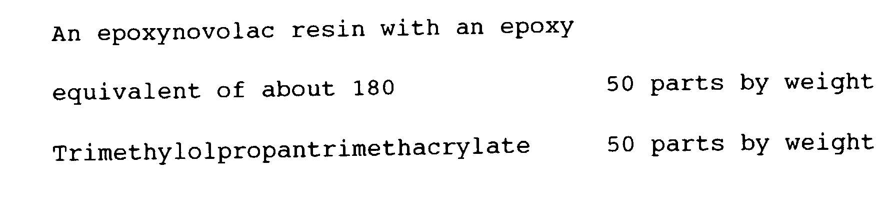

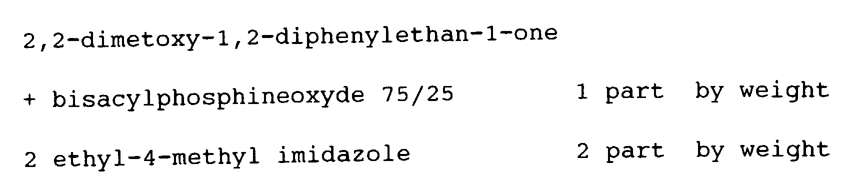

can be processed, after an exposition for 3 minutes to the radiation of a UVA lamp of the "EVERSUN" type of the company OSRAM, emitting a light radiation in the range of 320-420 nm. It fully cures after a complex curing cycle providing, for example, 2 hours at 120°C + 2 hours at 160°C + 2 hours at 200°C + 2 hours at 240°C + 2 hours at 280°C. The obtained polymer has a glass status transition temperature of about 300 C.

It should be pointed out that the subject method allows to make composite materials, by impregnating fabric materials with a resin mixture, thereby composite articles of manufacture can also be made, having all of the typical characteristics of the photocuring resins as well as the adhesion and clamping characteristics of the epoxy resins.

From the above disclosure it should be accordingly apparent that the invention fully achieves the intended aim and objects.

In particular, the fact is to be pointed out that a method has been provided which allows to optimize the molding processes of epoxy or polyurethane plastics materials or resins, so as to provide articles of manufacture devoid of shrinking defects with a very high production yield, owing to the possibility of quickly shaking out the made article, which becomes comparatively solid and self-supporting in a very short time, of the order of minutes.

The invention, as disclosed, is susceptible to several modifications and variations, all of which will come within the inventive idea scope.

Moreover, all of the details can be replaced by other technically equivalent elements.

## Claims

1. A method for quickly shaking out plastics molded articles of manufacture, characterized in that said method comprises the steps of mixing addition curing plastics materials with radically radiation curing plastics materials, pouring the obtained mixture into a mold, radiating by a light radiation compatible with said radically curing plastics materials in order to provide a self-supporting article, and shaking out of the mold said article to allow the addition curing plastics material to fully cure.

2. A method according to Claim 1, characterized in that said addition curing plastics materials comprise epoxy resins and polyurethane resins.

3. A method according to Claims 1 and 2, characterized in that said radically radiation curing plastics materials comprise photopolymers and/or acryl monomers, methacryl monomers or styrene, as suitably photostarted.

4. A method according to one or more of the preceding claims, characterized in that the compatible light comprises either a visible light or a UV light radiation.

5. A method according to one or more of the preceding claims, characterized in that said radically radiation curing plastics materials are included in a rate from 25% to 85%, said addition curing plastics materials being included in a rate from 75% to 15% of the total resin amount.

6. A method according to one or more of the preceding claims, characterized in that said method further comprises the step of impregnating a fabric by a mixture of said addition curing plastics materials and said radically radiation curing plastics materials so as to provide a composite type of material.
